# FASCICULE DE BREVET EUROPEEN

(11) **EP 2 608 226 B1**
(45) Date de publication et mention de la délivrance du brevet: **23.12.2015**
(21) Numéro de dépôt: 11195544.9
(22) Date de dépôt: 23.12.2011
(51) Int. Cl.: H01F 7/08, H01F 7/122, H01F 7/16, F16K 31/06

(54) **Actionneur solénoïde à chemisage magnétique**
Elektromagnetischer Aktuator mit magnetisierbarer Gleithülse
Solenoid actuator with magnetisable gliding sleeve

(43) Date de publication de la demande: 26.06.2013
(73) Titulaire: Techspace Aero S.A., 4041 Herstal (Milmort) (BE)
(72) Inventeur: Frippiat, Cédric, 4910 Jehanster (BE); Bomal, Jean-Christian, 4633 Melen (BE)
(74) Mandataire: Lecomte & Partners

(56) Documents cités:
- FR-A1- 2 713 820

## Description

### Domaine technique

L'invention a trait à un actionneur solénoïde. Plus particulièrement l'invention a trait à un actionneur électromagnétique bistable. L'invention a également trait à une vanne équipée d'un actionneur selon l'invention. Plus particulièrement l'invention a trait à une vanne pour fluide cryogénique. L'invention a également trait à un véhicule équipé d'un actionneur selon l'invention et/ou d'une vanne selon l'invention.

### Technique antérieure

Un actionneur électromagnétique bistable permet de commander un organe sous l'impulsion d'un courant/d'une tension de courte durée. Ce type d'actionneur comprend typiquement une ou plusieurs bobines, un plongeur, un aimant permanent et une carcasse avec deux noyaux, de part et d'autre du plongeur. Cet actionneur permet, grâce à l'aimant permanent, de maintenir en position le plongeur contre l'un ou l'autre des deux noyaux sans maintenir la commande. Les configurations de cet actionneur permettent d'effectuer des changements de position rapides, de générer des efforts élevés, ou de balayer des courses importantes. Ces caractéristiques peuvent être combinées en fonction de la bobine et du courant d'alimentation de la bobine.

Ce type d'actionneur est particulièrement adapté pour la réalisation de vannes. Un actionneur, par exemple de vanne cryogénique, est soumis à des contraintes thermiques et mécaniques importantes. La pression du fluide sollicite les matériaux et peut entrainer une rupture. Les écarts de températures générés par le fluide génèrent des dilatations dans le matériau car la température de service peut varier de quelques K à plus de 200°C. En cas de présence de plusieurs matériaux ayant des coefficients de dilatation différents, on assiste à de la dilatation différentielle qui rajoute une contrainte mécanique dans les matériaux.

L'art antérieur divulgue de tels actionneurs.

Le document US5127585 divulgue une valve d'injection de carburant haute pression comprenant un actionneur électromagnétique bistable. L'actionneur magnétique comprend une aiguille qui est reliée à un plongeur placé dans un champ produit par deux bobines et un aimant permanent intercalé entre les bobines. A l'intérieur des bobines sont montées des chemises amagnétiques qui logent des pôles magnétiques conduisant le flux magnétique vers le plongeur. Ce type d'actionneur permet de commander précisément un débit de fluide, en autorisant une ouverture de la vanne de courte durée tout en travaillant en haute pression.

Le document US 3755766 divulgue un actionneur électromagnétique bistable. II comprend un corps cylindrique dans lequel et placé une bobine logeant un plongeur libre en translation. L'actionneur comprend en outre un ressort et un aimant permanent placés axialement, permettant de maintenir en positon le plongeur selon l'une de ses deux positions d'équilibre. Dans l'actionneur est montée une chemise séparant le plongeur de la bobine. Ce type d'actionneur permet de déplacer le plongeur d'une position à l'autre sur des distances importantes, et de maintenir le plongeur sans énergie à fournir. Cet actionneur comprend une chemise à faible perméabilité magnétique. Une des positions est maintenue à l'aide d'un ressort, ce qui rajoute un composant et augmente l'encombrement de l'actionneur.

Le document US4829947 divulgue un actionneur de soupape électromagnétique bistable. Cet actionneur comprend deux bobines concentriques entres lesquelles est placé un aimant permanent annulaire. Au centre des bobines et de l'aimant permanent est monté un plongeur mobile en translation. Sur la face interne de l'aimant permanent peut être fixée une chemise fine permettant de mieux répartir le flux au niveau de l'aimant et de le protéger mécaniquement.

Le document US5144272 divulgue un actionneur électromagnétique comprenant une bobine dans laquelle sont montés deux noyaux et un plongeur mobile s'insérant dans les noyaux. L'actionneur comprend en outre une chemise en matériau magnétique s'étendant sur une partie seulement de la bobine de manière à canaliser le champ magnétique vers le plongeur.

Le document US6903647 divulgue une vanne avec actuateur électromagnétique qui comprend une bobine dans laquelle est montée une chemise constituée de deux portions de chemise emboités l'une dans l'autre, l'une étant conductrice de champ magnétique l'autre non. Cette particularité crée une discontinuité dans le champ magnétique ou l'entrefer.

De manière générale, pour les actionneurs sus mentionnés, autour de l'entrefer entre les noyaux et le plongeur sont placés conventionnellement un ou plusieurs éléments en matériau amagnétique pour éviter de magnétiquement court-circuiter l'entrefer. La présence de ce ou ces éléments en matériau amagnétique côte à côte avec des éléments ferromagnétiques de la chemise ou de la carcasse nécessite un empilement complexe qui peut rendre sa réalisation coûteuse, plus particulièrement quand l'actionneur doit être étanche.

Le document de brevet FR 2 713 820 A1 divulgue un actionneur conforme au préambule de la revendication 1.

### Résumé de l'invention

### Problème technique

L'invention a pour objectif de proposer un actionneur permettant de résoudre au moins un des problèmes susmentionnés. Plus particulièrement, l'invention a pour objectif de proposer un actionneur dont l'efficacité est améliorée. L'invention a également pour objectif d'augmenter la compacité et/ou de diminuer la masse de l'actionneur magnétique. L'invention a également pour objectif de proposer un actionneur dont le coût de production peut être réduit.

### Solution technique

L'invention a pour objet un actionneur électromagnétique comprenant un plongeur en matériau ferromagnétique, mobile en translation suivant une direction donnée; une chemise enveloppant le plongeur et s'étendant suivant la direction de translation du plongeur; un dispositif à solénoïde disposé autour de la chemise et apte à produire un champ magnétique; la chemise comprenant un matériau ferromagnétique s'étendant de manière continue sur la longueur du dispositif à solénoïde et/ou du plongeur dans au moins une position stable dudit plongeur, de manière à permettre le passage d'une partie du champ magnétique le long de la chemise en parallèle au plongeur, remarquable en ce que le matériau et/ou les dimensions de la chemise est/sont sélectionné(es/s) de manière à ce que la partie de champ magnétique passant par la chemise corresponden à moins de 50% dudit champ.

La partie de champ magnétique passant le long de la chemise en parallèle au plongeur ne passe ainsi pas par le plongeur et ne participe donc pas à la génération d'effort.

L'actionneur comprend préférentiellement une carcasse en matériau ferromagnétique, apte à guider le champ magnétique vers le plongeur. Elle peut comprendre un ou deux noyaux alignés en face du plongeur et formant avec lui un ou deux entrefers. La ou les positions stables du plongeur correspondent alors au contact du plongeur avec le ou un des noyaux. La chemise s'étend alors le long du ou d'au moins un des entrefers.

La chemise peut être faite majoritairement de matériau ferromagnétique. Sa paroi est préférentiellement majoritairement, plus préférentiellement encore exclusivement, en matériau ferromagnétique.

Le dispositif à solénoïde comprend avantageusement au moins un solénoïde enroulé autour du plongeur suivant sa direction de translation.

Selon un mode avantageux de l'invention, le matériau et/ou les dimensions de la portion de chemise est/sont sélectionné(es/s) de manière à ce que la partie du champ magnétique passant par la chemise corresponde à moins de 30%, préférentiellement 20% dudit champ.

Avantageusement, la chemise est majoritairement, préférentiellement totalement, en matériau ferromagnétique.

Selon un autre mode avantageux de l'invention, la chemise est réalisée en alliage ayant une induction à saturation plus faible que le matériau ferromagnétique principal.

Selon un encore autre mode avantageux de l'invention, le matériau de la chemise présente une induction à saturation inférieure à celle du matériau du plongeur, préférentiellement inférieure à 80%, plus préférentiellement encore 60% de celle du matériau du plongeur.

Selon un encore autre mode avantageux de l'invention, la chemise s'étend au-delà du dispositif à solénoïde, plus préférentiellement de part et d'autre dudit dispositif.

Selon un encore autre mode avantageux de l'invention, l'actionneur comprend un aimant permanent permettant d'obtenir un actionneur bistable.

Selon un encore autre mode avantageux de l'invention, l'actionneur comprend une carcasse en matériau ferromagnétique enveloppant le dispositif à solénoïde, la carcasse étant configurée pour guider le champ magnétique vers le plongeur et la portion de chemise.

Selon un encore autre mode avantageux de l'invention, la chemise est venue de matière sur toute sa longueur et comprend un épaulement ou une bride de fixation à une extrémité.

Selon un encore autre mode avantageux de l'invention, la chemise est fermée de manière étanche à une extrémité, préférentiellement à une extrémité opposée à l'autre extrémité comprenant un épaulement ou une bride de fixation.

Selon un encore autre mode avantageux de l'invention, le plongeur est en contact direct avec la chemise.

Selon un encore autre mode avantageux de l'invention, le/les matériaux présent(s) entre le dispositif à solénoïde et le plongeur est/sont majoritairement des matériaux ferromagnétiques.

Selon un encore autre mode avantageux de l'invention, l'actionneur comprend au moins un noyau positionné latéralement au plongeur, le ou au moins un des noyaux étant disposé dans la chemise; le ou au moins un des noyaux étant réalisé(s) en un matériau ferromagnétique d'induction à saturation plus élevée que celle du matériau de la chemise ou de sa portion.

Selon un encore autre mode avantageux de l'invention, l'actionneur comprend deux noyaux, de part et d'autre du plongeur.

Selon un encore autre mode avantageux de l'invention, l'actionneur est un actionneur monostable ou bistable.

L'invention a également pour objet une vanne pour fluide tel un fluide cryogénique, comprenant un actionneur ; remarquable en ce que l'actionneur est conforme à l'invention.

Selon un encore autre mode avantageux de l'invention, l'actionneur est configuré de manière à ce qu'un fluide puisse pénétrer l'intérieur de la chemise et être en contact avec le plongeur.

Selon un encore autre mode avantageux de l'invention, la carcasse, le plongeur et/ou le/les noyau(x) sont réalisés en alliage de fer cobalt (FeCo), ou un alliage de type fer nickel (FeNi), ou un alliage de Fer Silicium, ou du fer doux. Ou autre...

Selon un encore autre mode avantageux de l'invention la carcasse et la chemise comprennent des parties s'étendant axialement et des parties s'étendant radialement, les parties s'étendant axialement étant de moindre épaisseur que les parties s'étendant radialement.

D'autres caractéristiques et avantages de la présente invention seront mieux compris à l'aide de la description et des figures

### Avantages apportés

L'invention proposée permet de créer un actionneur plus compact et plus efficace. La chemise en matériau ferromagnétique permet d'éviter de devoir réaliser des étanchéités (par joint ou soudure ou autre) entre les différents matériaux permettant de créer des zones amagnétiques au droit des entrefers.

Ce type d'actionneur est particulièrement adapté à la réalisation de vannes cryogéniques étanches pour lesquelles les dilatations thermiques différentielles et/ou les pressions internes peuvent être importantes, menant pour des versions répondant à l'état de l'art à un besoin d'épaisseur de chemise plus importante, voire même à une infaisabilité. Ce type d'actionneur devient dès lors une solution préférable à un actionneur répondant à l'état de l'art.

### Brève description des dessins

- La figure 1 est une représentation d'une coupe de l'actionneur selon l'invention.
- La figure 2 est une représentation des lignes de flux magnétique dans l'actionneur selon l'invention dans une première position stable, les bobines n'étant pas alimentées en courant.
- La figure 3 est une représentation des lignes de flux magnétique dans l'actionneur selon l'invention lors de l'alimentation des bobines.
- La figure 4 est une représentation des lignes de flux magnétique dans l'actionneur selon l'invention dans une deuxième position stable, les bobines n'étant plus alimentées en courant.

### Description d'un mode de réalisation

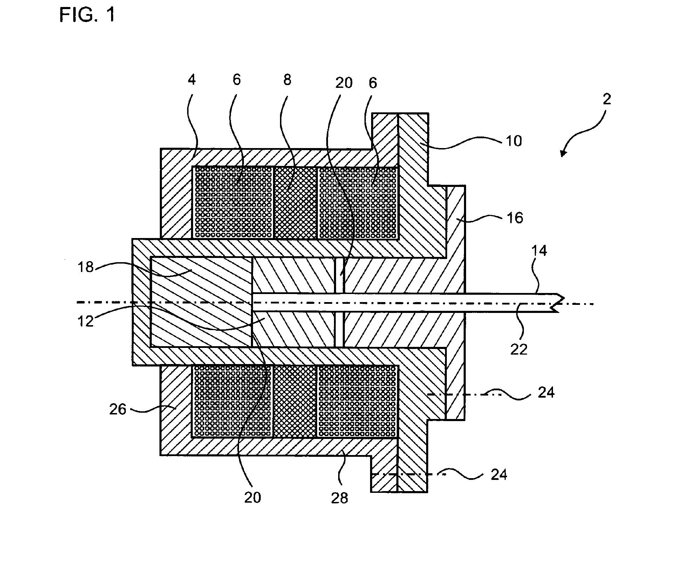

La figure 1 représente un actionneur 2 en coupe. Cet actionneur est essentiellement une pièce de révolution autour d'un axe 22 et s'étend majoritairement le long de cet axe 22.

L'actionneur 2 comprend un dispositif à solénoïde avec deux bobines 6 permettant de créer un champ magnétique lorsqu'elles sont parcourues par un courant. Les bobines 6 comprennent un enroulement de fil conducteur isolé formant des spires enroulées autour d'un cylindre. C'est la circulation du courant dans le fil qui génère le champ magnétique.

L'actionneur 2 comprend également une carcasse 4 réalisée en matériau ferromagnétique. En cas de présence d'un champ magnétique, la carcasse 4 est apte à s'aimanter. La carcasse 4 a une forme de cylindre et comprend deux parties, à savoir une partie radiale 26 s'étendant suivant un plan radial perpendiculaire à l'axe 22, et une partie cylindrique 28 allongée suivant l'axe 22. La partie radiale 26 comprend en son centre une ouverture circulaire débouchante. A l'opposé de la partie radiale 26, la partie cylindrique 28 comprend une face ouverte sur tout l'intérieur du cylindre. Au niveau de la face ouverte, la partie cylindrique 28 peut comprendre une excroissance radiale. La partie radiale 26 et la partie cylindrique 28 étant essentiellement perpendiculaires, la carcasse 4 a majoritairement une forme de révolution générée par un « L » autour de l'axe 22.

L'actionneur 2 comprend de plus une chemise 10 en matériau ferromagnétique. La chemise 10 comprend une partie interne avec une paroi en forme de tube s'étendant à l'intérieur de la carcasse 4

L'actionneur 2 comprend également un aimant 8 permanent. L'aimant 8 est placé en regard du circuit magnétique. L'aimant 8 est placé dans le volume torique. L'aimant 8 a une forme d'anneau dont l'axe central est confondu avec l'axe 22. L'aimant 8 est positionné entre les deux bobines 6. L'aimant 8 est positionné à l'intérieur du circuit magnétique et permet de maintenir un champ magnétique même lorsque les bobines 6 ne produisent plus de champ magnétique.

L'actionneur 2 comprend un plongeur 12. Le plongeur 12 est réalisé en matériau ferromagnétique et est libre en translation suivant l'axe 22, entre au moins deux positions. Le plongeur 12 permet de recevoir un flux magnétique et de le transformer en force, étant mobile il se translatera suivant une direction commandée par la différence de flux magnétique à ses faces. Un flux magnétique pourra le déplacer dans un sens ou dans l'autre, à condition d'inverser le champ magnétique en modifiant le courant électrique parcourant la ou les bobines 6.

Le plongeur 12 a une section circulaire d'un rayon égal au diamètre intérieur de la partie interne de la chemise 10. Le plongeur 12 y est en contact de la chemise 10 et glisse sur sa surface interne. Alternativement le diamètre extérieur du plongeur 12 est sensiblement inférieur au diamètre intérieur de la partie interne de la chemise 10.

Au niveau de la zone de contact et sur toute la course du plongeur 12, la chemise 10 peut comprendre un traitement de surface ou l'adjonction d'une pellicule d'un matériau polymère tel du téflon permettant de réduire les efforts de frictions. L'actionneur 2 comprend au moins deux noyaux (16, 18) comprenant des matériaux ferromagnétiques. Les noyaux (16, 18) sont positionnés de part et d'autres du plongeur 12 et assurent le rôle de butées limitant la course de ce dernier. Alternativement, le noyau 18 peut disparaître (autrement dit, le noyau et la chemise peuvent être réalisés en une seule pièce).

Ces noyaux sont insérés dans la partie interne de la chemise 10, comprennent des sections circulaires et s'étendent axialement suivant l'axe 22. Entre le plongeur 12 et les noyaux (16, 18) sont présents des entrefers 20.

L'actionneur 2 a un aspect bistable dans la mesure où le plongeur 12 peut rester en position contre un noyau (16, 18) même lorsqu'aucune des bobines 6 ne produit de champ magnétique. En effet l'aimant 8 permet de maintenir un flux dans le circuit magnétique qui permet de maintenir en position le plongeur 12.

Pour déplacer à nouveau le plongeur 12, il faut qu'une ou 2 des bobines 6 soient parcourues par un courant et génèrent ainsi un champ magnétique dont les lignes forment une boucle autour des bobines en passant par l'aimant permanent.

L'invention est avantageuse en ce sens que la chemise 10 est en un matériau de moindre induction à saturation que la carcasse 4, le plongeur 12 et les noyaux (16, 18). De la sorte, le court-circuitage de l'entrefer est limité et les performances améliorées.

L'invention est également remarquable en ce sens qu'elle permet d'utiliser une seule pièce, à savoir la chemise 10 pour séparer le plongeur 12 des bobines 6. Cette construction évite les empilements de matériaux qui doivent être soudés. On précise que la soudure est un procédé de fabrication pouvant fragiliser localement une pièce, et à cause duquel on prend en compte un coefficient d'abattement en termes de résistance mécanique. La conséquence de ce coefficient d'abattement est qu'il faut sur dimensionner les pièces, ce qui alourdirait l'actionneur 2. Avantageusement, la chemise 10 est réalisée en un matériau ferromagnétique ayant une induction à saturation comprise entre 0,50 et 1,50 Tesla, préférentiellement comprise entre 0,60 et 1,10 Tesla, encore plus préférentiellement comprise entre 0,70 et 1,00 Tesla. Le choix de l'induction à saturation de la chemise répond à un compromis car il est souhaitable qu'elle soit suffisamment importante pour laisser passer du flux magnétique au travers de la chemise 10 entre le noyau 18 et la carcasse 4 et ne pas avoir besoin d'augmenter sa longueur. En parallèle, il est souhaitable que cette induction à saturation ne soit pas trop élevée pour ne pas trop court-circuiter les entrefers entre les noyaux (16, 18) et le plongeur 12.

Dans l'alternative où le noyau externe 16 s'étend radialement de manière à venir au contact de la partie cylindrique 28 de la carcasse 4, le circuit magnétique est amélioré car le noyau externe 16 peut conduire d'avantage de flux magnétique que la chemise 10 au niveau de la jonction avec la partie cylindrique 28 de la carcasse 4.

L'actionneur 2 peut être employé dans une vanne. La vanne comprend un actionneur 2 dans lequel est montée une tige 14 fixée au plongeur 12 à l'une de ses extrémités. L'autre extrémité de la tige 14 peut être reliée à un moyen de contrôle de flux tel qu'une soupape ouvrant ou fermant un orifice. La tige 14, préférentiellement réalisée en matériau amagnétique, ressort de la vanne en passant par un alésage réalisé dans le noyau externe 16 de long de l'axe 22.

Au niveau de la jonction entre le noyau 16 et la chemise 10 peuvent être montés des moyens d'étanchéité. Les moyens d'étanchéité peuvent être des joints toriques positionnés à l'interface entre les deux pièces et qui sont pressés lors du montage de moyens de fixations 24 telles des vis.

On souligne que la vanne peut se dispenser de moyens d'étanchéité entre la tige 14 et le noyau externe 16 car le liquide peut pénétrer dans la chemise 10 sans perturber les bobines 6. Cet aspect permet de simplifier la conception, améliore la compacité et ne demande pas d'adaptation de formes pouvant perturber le flux magnétique.

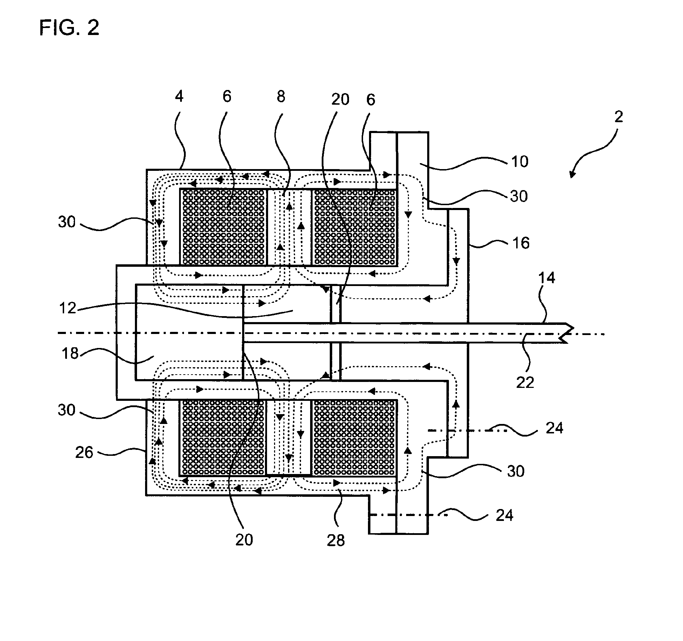

La figure 2 est une représentation des lignes de flux 30 induites dans l'actionneur 2 dans une première position stable du plongeur 12, les bobines 6 de l'actionneur 2 n'étant pas alimentées en courant. Les lignes de flux 30 sont représentées en lignes pointillées et leur sens est indiqué à l'aide de flèches. Cette figure illustre également la densité de flux magnétique par le nombre de lignes de flux 30 représentées d'un côté ou de l'autre du circuit magnétique.

Malgré l'absence de courant dans les bobines 6, un flux magnétique est généré dans le circuit grâce à l'aimant 8. Ce flux magnétique est conduit dans l'ensemble du circuit, il circule dans la carcasse 4 et se répartit suivant deux sens. Dans le premier sens, sens majoritairement emprunté, le flux se dirige du côté du plongeur 12 où il reste en position stable. Pour ce faire, le flux magnétique traverse en majorité la partie interne de la chemise 10 pour aller dans le noyau interne 18 du côté borgne de la chemise 10, puis se canalise dans le plongeur 12 et enfin retraverse la chemise 10 pour revenir à l'aimant 8. On note qu'une majorité du flux passe par le noyau 18 plutôt que dans la chemise 10 en raison de leurs épaisseurs et de leurs inductions à saturation si cette dernière est atteinte. Une partie minoritaire du champ ne passe pas dans le noyau interne 18 et reste dans la partie interne cylindrique de la chemise 10 jusqu'à regagner l'aimant 8.

Dans le deuxième sens, sens minoritairement emprunté par le flux, ce dernier se dirige du côté opposé à la position du plongeur 12. Le flux magnétique quitte la carcasse 4 et traverse la partie externe de la chemise 10 pour être canalisé dans le noyau externe 16, du côté débouchant de la chemise 10. Ensuite ce flux magnétique retourne dans l'aimant 8 en traversant la partie interne de la chemise 10, et en faible proportion le plongeur 12. Une faible partie du flux magnétique reste au sein de la chemise 10 et regagne directement l'aimant 8.

Les descriptions des cheminements qui viennent d'être faites correspondent à un positionnement du pôle nord de l'aimant au niveau de la carcasse 4 et du pôle sud au niveau de la chemise 10. Les pôles peuvent être inversés, dans ce cas la description du cheminement que suivent les lignes de flux 30 qui vient d'être faite doit être lue dans l'ordre inverse.

Le flux magnétique circule majoritairement dans le noyau interne 18, l'entrefer 20 qu'il partage avec le plongeur reçoit d'avantage de flux que l'entrefer opposé, situé du côté du noyau externe 16. Par conséquent le plongeur 12 subit une force le plaquant contre le noyau interne 18, ce qui représente une première position stable pour le plongeur 12. La position stable est assurée par l'aimant 8 sans fournir de courant aux bobines 6.

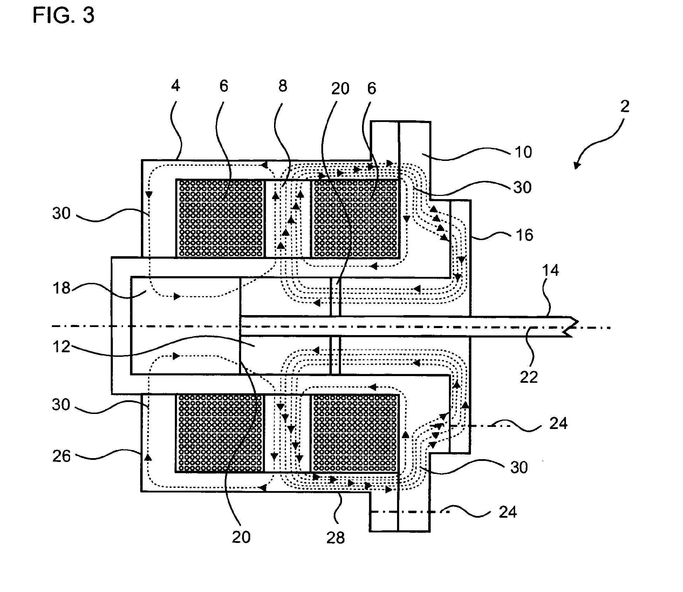

La figure 3 est une représentation des lignes de flux 30 induites dans l'actionneur 2 lorsqu'une ou 2 bobines 6 est alimentée en courant, le plongeur 12 étant dans sa première position stable.

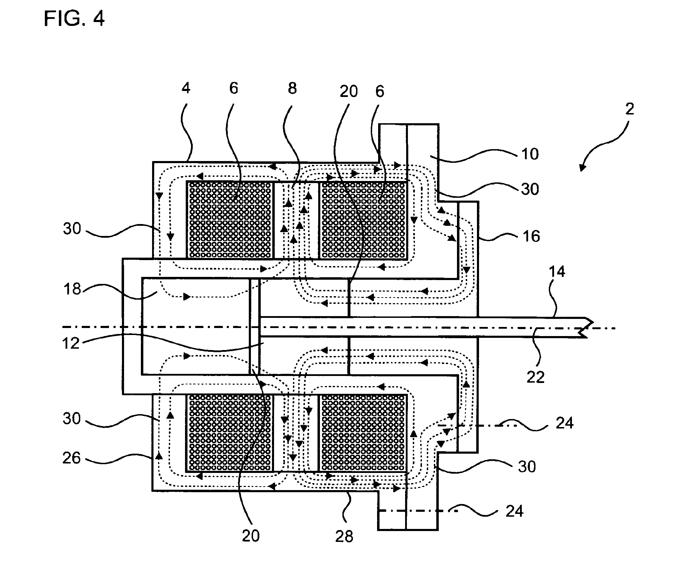

La figure 4 est une représentation des lignes de flux 30 induites dans l'actionneur 2 dans une deuxième position stable du plongeur 12, la bobine 6 de l'actionneur 2 n'étant plus alimentée en courant. Par rapport à la figure 3, on constate que le flux traversant le noyau externe 16 diminue.

En l'absence de courant dans les bobines 6, le flux magnétique est à nouveau généré dans le circuit grâce à l'aimant 8. Son flux magnétique circule dans la carcasse 4 et se répartit suivant deux sens. Dans le premier sens, sens majoritairement emprunté par le flux, le champ magnétique va majoritairement du côté du plongeur 12. Pour ce faire, le flux magnétique quitte la carcasse 4 et traverse la chemise 10 au niveau de sa partie externe pour être accueilli dans le noyau externe 16 puis se canalise dans le plongeur 12 et enfin retraverse la chemise 10 pour revenir à l'aimant 8. Une partie minoritaire du champ issue de la carcasse 4 ne retourne pas dans le noyau interne 16, du côté borgne de la chemise 10 et reste dans cette dernière jusqu'à regagner l'aimant 8.

Dans le deuxième sens, sens minoritairement emprunté par le flux, le flux magnétique se dirige du côté opposé à la position du plongeur 12. Le flux magnétique traverse la chemise 10 pour aller dans le noyau interne 18. Ensuite le flux magnétique retourne dans l'aimant 8 en traversant la partie interne de la chemise 10 ou en faible proportion le plongeur 12. Une partie du flux magnétique reste au sein de la chemise 10 et regagne directement l'aimant 8.

Le flux magnétique circule majoritairement dans le noyau externe 16 en raison de l'entrefer opposé, situé du côté du noyau interne 18. Par conséquent le plongeur 12 subit une force le plaquant contre le noyau interne 16, ce qui représente une deuxième position stable pour le plongeur 12. La position stable est assurée par l'aimant 8 sans fournir de courant aux bobines 6. Cette deuxième position stable confère la caractéristique bistable à l'actionneur.

De manière générale, il est à noter que les bobines 6 peuvent avoir des longueurs différentes, et/ou des diamètres différents, et/ou des nombres de spires différents, et/ou des fils différents. Les deux bobines 6 peuvent être remplacés par une seule bobine 6 créant le champ magnétique. L'utilisation de 2 bobines permet de palier une panne de l'une d'elles et procure de la sécurité d'utilisation telle que recherchée dans le domaine aéronautique.

Il est également à noter que l'invention n'est pas limitée à un actionneur bistable. En effet, elle est également applicable notamment à un actionneur monostable.

## Revendications

1. Actionneur (2) électromagnétique comprenant:
- un plongeur (12) en matériau ferromagnétique, mobile en translation suivant une direction donnée ;
- une chemise (10) enveloppant le plongeur (12) et s'étendant suivant la direction de translation du plongeur (12) ;
- un dispositif à solénoïde (6) disposé autour de la chemise (10), apte à produire un champ magnétique ;
la chemise (10) comprenant un matériau ferromagnétique s'étendant de manière continue sur la longueur du dispositif à solénoïde (6) et/ou du plongeur (12) dans au moins une position stable dudit plongeur, de manière à permettre le passage d'une partie du champ magnétique le long de la chemise en parallèle au plongeur (12) ;
**caractérisé en ce que**
le matériau et/ou les dimensions de la chemise est/sont sélectionné(es/s) de manière à ce que la partie du champ magnétique passant par la chemise corresponde à moins de 50% dudit champ.

2. Actionneur selon la revendication 1, **caractérisé en ce que** le matériau et/ou les dimensions de la chemise est/sont sélectionné(es/s) de manière à ce que la partie du champ magnétique passant par la chemise corresponde à moins de 30%, préférentiellement 20% dudit champ.

3. Actionneur selon l'une des revendications 1 et 2, **caractérisé en ce que** le matériau de la chemise (10) présente une induction à saturation inférieure à celle du matériau du plongeur (12), préférentiellement inférieure à 80%, plus préférentiellement 60%, plus préférentiellement encore 40%, encore plus préférentiellement 10% de celle du matériau du plongeur (12).

4. Actionneur selon l'une des revendications 1 à 3, **caractérisé en ce que** la chemise (10) s'étend au-delà du dispositif à solénoïde, plus préférentiellement de part et d'autre dudit dispositif.

5. Actionneur selon l'une des revendications 1 à 4, **caractérisé en ce qu'**il comprend un aimant permanent (8) disposé autour de la chemise, le dispositif à solénoïde comprenant préférentiellement deux bobines réparties de part et d'autre de l'aimant permanent.

6. Actionneur selon l'une des revendications 1 à 5, **caractérisé en ce que** l'actionneur (2) comprend une carcasse (4) en matériau ferromagnétique enveloppant le dispositif à solénoïde (6), la carcasse (4) étant configurée pour guider le champ magnétique vers le plongeur (12) et la chemise (10)

7. Actionneur selon l'une des revendications 1 à 6, **caractérisé en ce que** la chemise (10) est venue de matière sur toute sa longueur et comprend un épaulement ou une bride de fixation à une extrémité.

8. Actionneur selon la revendication 7, **caractérisé en ce que** la chemise (10) est fermée de manière étanche à une extrémité, préférentiellement à une extrémité opposée à l'autre extrémité comprenant un épaulement ou une bride de fixation.

9. Actionneur selon l'une des revendications 1 à 8, **caractérisé en ce que** le plongeur (12) est en contact direct avec la chemise.

10. Actionneur selon l'une des revendications 1 à 9, **caractérisé en ce que** le/les matériaux présent(s) entre le dispositif à solénoïde (6) et le plongeur (12) est/sont majoritairement des matériaux ferromagnétiques

11. Actionneur selon l'une des revendications 1 à 10, **caractérisé en ce qu'**il comprend au moins un noyau (16, 18) positionné latéralement au plongeur (12), le ou au moins un des noyaux (16, 18) étant disposé(s) dans la chemise (10); le ou au moins un des noyaux (16, 18) étant réalisé(s) en un matériau ferromagnétique d'induction à saturation plus élevée que celle du matériau de la chemise (10) ou de sa portion

12. Actionneur selon la revendication 11, **caractérisé en ce qu'**il comprend deux noyaux (16, 18), de part et d'autre du plongeur (12).

13. Actionneur selon l'une des revendications 1 à 12, **caractérisé en ce qu'**il est un actionneur monostable ou bistable.

14. Vanne pour fluide tel un fluide cryogénique, comprenant un actionneur (2) ; **caractérisé en ce que** l'actionneur (2) est conforme à l'une des revendications 1 à 13.

15. Vanne selon la revendication 14, **caractérisé en ce que** l'actionneur est configuré de manière à ce qu'un fluide puisse pénétrer l'intérieur de la chemise (10) et être en contact avec le plongeur (12).

## Patentansprüche

1. Elektromagnetisches Stellglied (2), mit:
- einem Stößel (12) aus einem ferromagnetischen Material, der seitlich in einer vorgegebenen Richtung beweglich ist;
- einem Mantel (10), der den Stößel (12) umgibt und sich in Richtung der seitlichen Bewegung des Stößels (12) erstreckt;
- einer Elektromagnetvorrichtung (6), die um den Mantel (10) herum angeordnet ist und in der Lage ist, ein Magnetfeld zu erzeugen;
wobei der Mantel (10) ein ferromagnetisches Material beinhaltet, das sich kontinuierlich über die Länge der Elektromagnetvorrichtung (6) und/oder des Stößels (12) in mindestens einer stabilen Position des genannten Stößels erstreckt, um den Durchlass eines Teils des Magnetfeldes entlang des Mantels parallel zum Stößel (12) zu ermöglichen;
**dadurch gekennzeichnet, dass**
das Material und/oder die Abmessungen des Mantels so gewählt wird/werden, dass der Teil des Magnetfeldes, der den Mantel passiert, mindestens 50% des genannten Feldes entspricht.

2. Stellglied nach Anspruch 1, **dadurch gekennzeichnet, dass** das Material und/oder die Maße des Mantels so gewählt wird/werden, dass der Teil des Magnetfeldes, der den Mantel passiert, mindestens 30%, vorzugsweise 20% des genannten Feldes entspricht.

3. Stellglied nach einem der Ansprüche 1 und 2, **dadurch gekennzeichnet, dass** das Material des Mantels (10) eine Induktion aufweist, deren Sättigung geringer ist, als diejenige des Materials des Stößels (12), vorzugweise weniger als 80%, besonders bevorzugt weniger als 60%, noch bevorzugter weniger als 40% und noch bevorzugter weniger als 10% derjenigen des Materials des Stößels (12) beträgt.

4. Stellglied nach einem der Ansprüche 1 bis 3, **dadurch gekennzeichnet, dass** sich der Mantel (10) über die Elektromagnetvorrichtung hinaus erstreckt, vorzugsweise beiderseits der genannten Spule.

5. Stellglied nach einem der Ansprüche 1 bis 4, **dadurch gekennzeichnet, dass** es einen Permanentmagneten (8) beinhaltet, der um den Mantel herum angeordnet ist, wobei die Elektromagnetvorrichtung vorzugsweise zwei Spulen beinhaltet, die beiderseits des Permanentmagneten angeordnet sind.

6. Stellglied nach einem der Ansprüche 1 bis 5, **dadurch gekennzeichnet, dass** das Stellglied (2) ein Gehäuse (4) aus einem ferromagnetischen Material beinhaltet, das die Elektromagnetvorrichtung (6) umgibt, wobei das Gehäuse (4) so konfiguriert ist, dass es das Magnetfeld zum Stößel (12) und zum Mantel (10) leitet.

7. Stellglied nach einem der Ansprüche 1 bis 6, **dadurch gekennzeichnet, dass** der Mantel (10) in gesamter Länge aus dem gleichen Material besteht und an einem Ende eine Schulter oder einen Befestigungsflansch beinhaltet.

8. Stellglied nach Anspruch 7, **dadurch gekennzeichnet, dass** der Mantel (10) an einem Ende dicht verschlossen ist, vorzugsweise an einem Ende, das dem anderen Ende mit einer Schulter oder einem Befestigungsflansch gegenüberliegt.

9. Stellglied nach einem der Ansprüche 1 bis 8, **dadurch gekennzeichnet, dass** der Stößel (12) in direktem Kontakt mit dem Mantel steht.

10. Stellglied nach einem der Ansprüche 1 bis 9, **dadurch gekennzeichnet, dass** das/die Material(ien), das/die zwischen der Elektromagnetvorrichtung (6) und dem Stößel (12) vorhanden ist/sind, mehrheitlich ferromagnetische(s) Material(ien) ist/sind.

11. Stellglied nach einem der Ansprüche 1 bis 10, **dadurch gekennzeichnet, dass** es mindestens einen Kern (16, 18) beinhaltet, der seitlich zum Stößel (12) angeordnet ist, wobei der Kern oder mindestens einer der Kerne (16, 18) aus einem ferromagnetischen Material mit einer Induktion besteht, deren Sättigung höher ist, als diejenige des Materials des Mantels (10) oder eines Teils davon.

12. Stellglied nach Anspruch 11, **dadurch gekennzeichnet, dass** es zwei Kerne (16, 18) beiderseits des Stößels (12) beinhaltet.

13. Stellglied nach einem der Ansprüche 1 bis 12, **dadurch gekennzeichnet, dass** es sich um ein monostabiles oder bistabiles Stellglied handelt.

14. Ventil für eine Flüssigkeit, wie z.B. eine Kryolflüssigkeit, das ein Stellglied (2) beinhaltet, **dadurch gekennzeichnet, dass** das Stellglied (2) einem der Ansprüche 1 bis 13 entspricht.

15. Ventil nach Anspruch 14, **dadurch gekennzeichnet, dass** das Stellglied in der Weise konfiguriert ist, dass die Flüssigkeit in den Mantel eindringen und mit dem Stößel (12) in Kontakt treten kann.

## Claims

1. Electromagnetic actuator (2) comprising:
- a plunger (12) made of ferromagnetic material, able to move in translation in a given direction;
- a sleeve (10) surrounding the plunger (12) and extending in the direction of translation of the plunger (12);
- a solenoid device (6) positioned around the sleeve (10), suitable for generating a magnetic field;
wherein
the sleeve (10) comprises a ferromagnetic material extending continuously over the length of the solenoid device (6) and/or the plunger (12) in at least one stable position of the said plunger, so as to allow part of the magnetic field to pass along the sleeve in parallel to the plunger (12);
**characterized in that**
the material and/or the dimensions of the sleeve is/are selected so that the fraction of the magnetic field passing through the sleeve corresponds to less than 50% of the said field.

2. Actuator in accordance with Claim 1, wherein the material and/or the dimensions of the sleeve is/are selected so that the fraction of the magnetic field passing through the sleeve corresponds to less than 30%, preferably 20% of the said field.

3. Actuator according to one of Claims 1 and 2, wherein the material of the sleeve (10) has a saturation induction less than that of the material of the plunger (12), preferably less than 80%, more preferably 60%, more preferably still 40%, even more preferably 10% of that of the material of the plunger (12).

4. Actuator according to one of Claims 1 to 3, wherein the sleeve (10) extends beyond the solenoid device, more preferably beyond both ends of the said device.

5. Actuator according to one of Claims 1 to 4, wherein a permanent magnet (8) is positioned around the sleeve, the solenoid device comprising two coils preferably positioned on either side of the permanent magnet.

6. Actuator according to one of Claims 1 to 5, wherein the actuator (2) comprises a casing (4) made of ferromagnetic material surrounding the solenoid device (6), the casing (4) being configured to guide the magnetic field towards the plunger (12) and the sleeve (10).

7. Actuator according to one of Claims 1 to 6, wherein the sleeve (10) is integral over its entire length and comprises a shoulder or a mounting flange at one end.

8. Actuator according to Claim 7, wherein the sleeve (10) is sealed at one end, preferably at the end opposite to the end comprising a shoulder or a mounting flange.

9. Actuator according to one of Claims 1 to 8, wherein the plunger (12) is in direct contact with the sleeve.

10. Actuator according to one of Claims 1 to 9, wherein the material(s) present between the solenoid device (6) and the plunger (12) is/are made of predominantly ferromagnetic material(s).

11. Actuator according to one of Claims 1 to 10, wherein at least one core (16, 18) is positioned laterally against the plunger (12), at least one of the cores (16, 18) being located in the sleeve (10), at least one of the cores (16, 18) being formed of a ferromagnetic material of higher saturation induction than that of the material of the sleeve (10) or a portion thereof.

12. Actuator according to Claim 11, wherein two cores (16, 18) are positioned on either side of the plunger (12).

13. Actuator according to one of Claims 1 to 12, wherein the actuator is bi-stable or monostable.

14. Valve for a fluid such as a cryogenic fluid, comprising an actuator (2), wherein the actuator (2) is in accordance with any one of Claims 1 to 13.

15. Valve according to Claim 14, wherein the actuator is configured so that a fluid can enter the interior of the sleeve (10) and be in contact with the plunger (12).
